# EUROPÄISCHE PATENTSCHRIFT

(11) **EP 1 824 634 B1**
(45) Veröffentlichungstag und Bekanntmachung des Hinweises auf die Patenterteilung: **06.08.2008**
(21) Anmeldenummer: 05817735.3
(22) Anmeldetag: 15.12.2005
(51) Int. Cl.: B23K 26/14, B23K 26/06, B23K 26/20, B23K 28/02

(54) **VERFAHREN UND VORRICHTUNG ZUM KOMBINIERTEN LASER-LICHTBOGENSCHWEISSEN MIT EINER STEUERUNG DER LASEREINHEIT IN ABHÄNGIGKEIT DES SCHWEISSBRENNERS**
METHOD AND DEVICE FOR COMBINED LASER-ARC WELDING WITH CONTROL OF LASER UNIT ACCORDING TO WELDING TORCH
PROCEDE ET DISPOSITIF DE SOUDAGE COMBINE AU LASER ET A L'ARC DOTE D'UN DISPOSITIF DE COMMANDE DE L'UNITE LASER FONCTION DU CHALUMEAU A SOUDER

(30) Priorität: 15.12.2004 AT 21022004
(43) Veröffentlichungstag der Anmeldung: 29.08.2007
(73) Patentinhaber: Fronius International GmbH, 4643 Pettenbach (AT)
(72) Erfinder: AIGNER, Gerald, A-4715 Taufkirchen (AT); HACKL, Heinz, A-4551 Ried/Traunkreis (AT)
(74) Vertreter: Sonn & Partner Patentanwälte
(86) Internationale Anmeldenummer: PCT/AT2005/000504
(87) Internationale Veröffentlichungsnummer: WO 2006/063374

(56) Entgegenhaltungen:
- EP-A- 1 609 557
- WO-A-02/40211
- DE-C1- 19 600 627
- US-A- 5 866 870
- PATENT ABSTRACTS OF JAPAN Bd. 2003, Nr. 12, 5. Dezember 2003 (2003-12-05) -& JP 2005 224810 A (MATSUSHITA ELECTRIC IND CO LTD), 25. August 2005 (2005-08-25)
- PATENT ABSTRACTS OF JAPAN Bd. 2003, Nr. 12, 5. Dezember 2003 (2003-12-05) -& JP 2005 059079 A (YASKAWA ELECTRIC CORP), 10. März 2005 (2005-03-10)
- PATENT ABSTRACTS OF JAPAN Bd. 2003, Nr. 12, 5. Dezember 2003 (2003-12-05) & JP 2003 290947 A (HOSODA TAKESHI), 14. Oktober 2003 (2003-10-14)
- PATENT ABSTRACTS OF JAPAN Bd. 2003, Nr. 12, 5. Dezember 2003 (2003-12-05) -& JP 2004 009061 A (DAIHEN CORP), 15. Januar 2004 (2004-01-15)
- PATENT ABSTRACTS OF JAPAN Bd. 2000, Nr. 07, 29. September 2000 (2000-09-29) -& JP 2000 107880 A (TOSHIBA FA SYST ENG CORP), 18. April 2000 (2000-04-18)

## Beschreibung

Die Erfindung betrifft ein Verfahren zum kombinierten Laser-Lichtbogenschweißen mittels Handschweißbrenner, wobei eine Lasereinheit zur Erzeugung eines Laserstrahls, und ein Schweißbrenner zur Erzeugung eines Lichtbogens mit Energie versorgt und gesteuert werden, und die Lasereinheit in Abhängigkeit des Schweißbrenners gesteuert wird, wobei während des Schweißprozesses Parameter des Lichtbogens überwacht werden und die Lasereinheit erst nach dem Zünden des Lichtbogens zugeschaltet wird (siehe, z.B., DE 196 00 627 C).

Weiters betrifft die Erfindung eine Vorrichtung zum kombinierten Laser-Lichtbogenschweißen, mit einer Lasereinheit zur Erzeugung eines Laserstrahles, einem Handschweißbrenner zur Erzeugung eines Lichtbogens, einer Versorgungseinheit für die Lasereinheit und einer Versorgungseinheit für den Schweißbrenner, und zumindest einer Steuereinheit zum Steuern der Lasereinheit und des Schweißbrenners, wobei eine Einrichtung zur Steuerung der Lasereinheit in Abhängigkeit des Schweißbrenners vorgesehen ist, welche mit einer Einrichtung zur Erfassung der Schweißspannung und bzw. oder des Schweißstromes des Schweißbrenners verbunden ist (siche, z.B., DE 196 00 627 C).

Dabei ist der Schweißbrenner bevorzugt für die Durchführung eines MIG(Metall-Inert-Gas)/MAG(Metall-Aktiv-Gas) Schweißprozess ausgebildet.

Die WO 02/40211 A1 beschreibt einen Laser-Hybrid-Schweißkopf für einen Laser-Hybrid-Schweißprozess mit einer Lasereinheit zur Erzeugung eines Lasers und einem Schweißbrenner zur Erzeugung eines Lichtbogens sowie einer Zuführvorrichtung für einen Schweißdraht. Bisher sind derartige Einrichtungen relativ voluminös und somit nur als Schweißgerät für Roboter-Anwendungen, nicht als Handschweißgerät, verwendbar.

In den JP 2002113588 A und JP 2002103075 A werden kombinierte Laser-Lichtbogenschweißgeräte, so genannte Laser-Hybridschweißeinheiten beschrieben. Die Laser-Hybridschweißeinheiten kombinieren die Vorteile des Lasers, wie Schnelligkeit und gute Wärmeeinbringung in das Werkstück mit dem Vorteil herkömmlicher Schweißverfahren, z.B. dem MIG-(Metall-Inert-Gas)Schweißverfahren, wie eine gute Spaltüberbrückbarkeit.

Die JP 2003290947 A offenbart ein Verfahren zum kombinierten Lichtbogenschweißen, sowie eine entsprechende Vorrichtung zum kombinierten Laserlichtbogenschweißen, welche auf eine Roboterschweißanlage gerichtet sind.

Die JP 2004009061 A beschreibt ein Schweißverfahren zum kombinierten Laserlichtbogenschweißen, wobei die Leistung des Lasers in Abhängigkeit des Schweißbrenners gesteuert wird.

Die DE 196 00 627 Cl zeigt ein Verfahren zum Bearbeiten von Werkstücken mit Laserstrahlung, welches zur Schaffung eines berührungslosen Zündverfahrens speziell ausgeführt wird.

Schließlich zeigt die US 5,866,870 A ein Verfahren zum kombinierten Laserlichtbogenschweißen, wobei die Energieeinbringung in Abhängigkeit des zu verschweißenden Materials verändert wird.

Nachteilig dabei ist, dass für die Versorgung der Lasereinheit relativ viel Energie erforderlich ist. Bei derzeitigen kombinierten Laser-Lichtbogenschweißgeräten erfolgt die Steuerung der Lasereinheit mit einer fixen Zuordnung zur Steuerung des Schweißbrenners zur Erzeugung des Lichtbogens.

Die Aufgabe der vorliegenden Erfindung besteht daher in der Schaffung eines oben erwähnten Verfahrens und einer oben genannten Vorrichtung, durch welche eine optimale Kombination des Laserstrahls mit dem Lichtbogen für optimale Schweißergebnisse, höchste Schweißgeschwindigkeiten und möglichst geringem Energieverbrauch bei größtmöglicher Sicherheit erzielbar sind. Die Nachteile bekannter Systeme sollen vermieden oder reduziert werden.

Gelöst wird die erfindungsgemäße Aufgabe in verfahrensmäßiger Hinsicht dadurch, dass die Lasereinheit mit einer zeitlichen Verzögerung nach dem Zünden des Lichtbogens zugeschaltet wird, wobei die Zündung dadurch erkannt wird, dass Parameter des Lichtbogens definierte Werte erreichen und dass bei definierter Abweichung eines Parameters des Lichtbogens über eine vorgegebene Zeitdauer die Lasereinheit deaktiviert wird. Durch diese Abhängigkeit der Steuerung der Lasereinheit von der Steuerung des Schweißbrenners kann immer eine optimale Einstellung auf die jeweiligen Erfordernisse vorgenommen werden. Zur Erzielung der Steuerung der Lasereinheit in Abhängigkeit des Schweißbrenners werden während des Schweißprozesses Parameter des Lichtbogens überwacht und bei definierter Abweichung eines Parameters des Lichtbogens die Lasereinheit über eine vorgegebene Zeitdauer deaktiviert. Somit kann erreicht werden, dass der Laserstrahl unmittelbar nach Abreissen des Lichtbogens, was durch definierte Abweichung eines Parameters des Lichtbogens erkannt wird, deaktiviert wird. Somit wird verhindert, dass bei nichtgezündetem Lichtbogen ein Laserstrahl erzeugt bzw. aufrecht erhalten wird, welcher insbesondere bei Handschweißgeräten zu Verletzungen oder Beschädigungen führen kann. Das Verletzungsrisiko durch den Laserstrahl ist nämlich dadurch erhöht, dass es sich beim Laserlicht meist um nicht sichtbares Infrarot-Licht handelt. Es muss daher insbesondere für Handschweißgeräte Sorge getragen werden, dass eine Verletzung des Bedienungspersonals oder anderer Personen durch das Laserlicht sicher vermieden wird.

Durch die Deaktivierung der Lasereinheit über eine vorgegebene Zeitdauer kann vermieden werden, dass bei Schweißverfahren, bei welchen es zumindest kurzzeitig zu einem Kurzschluss des Lichtbogens kommt, gleich eine Abschaltung des Lasers erfolgt. Dabei wird die vorgegebene Zeitdauer höher als jene Dauer des Kurzschlusses des Lichtbogens, wie sie bei einem solchen Schweißverfahren üblicherweise auftritt, eingestellt. Beispielsweise bleibt der Laserstrahl bei einem Kurzschluss, bei dem zwar kein Lichtbogen vorhanden ist, jedoch ein Strom detektiert wird, weiter aktiv. Für den Fall, dass der Lichtbogen zu lange wird oder abreißt, wird ein Schwellwert von Strom bzw. Spannung überschritten und der Laserstrahl deaktiviert.

Erhöht wird die oben genannte Sicherheit auch dadurch, dass die Lasereinheit erst bei gezündetem Lichtbogen zugeschaltet wird, wobei die Zündung dadurch erkannt wird, dass Parameter des Lichtbogens definierte Werte erreichen und somit ein definierter Lichtbogen-Zustand erreicht wird. Durch diese Maßnahme wird aber auch die relativ hohe Energieeinbringung zur Erzeugung des Laserstrahls minimiert. Nunmehr wird der Laserstrahl erst nach dem Zünden eines Lichtbogens aktiviert und insbesondere eine definierte Zeitdauer nach Beendigung des Schweißverfahrens beispielsweise eines MIG-Schweißverfahrens, wieder deaktiviert. Somit kann beispielsweise bei einem Handschweißverfahren der Benutzer vor oder nach dem Schweißverfahren den Laserstrahl nicht unbeabsichtigt aktivieren. Dadurch wird auch sichergestellt, dass der Benutzer den Schweißbrenner in eine zur Durchführung des Schweißverfahrens notwendige Position gebracht hat, bevor der Laserstrahl aktiviert wird. Durch die Messung von Strom und Spannung des Lichtbogens wird auch gewährleistet, dass der Schweißbrenner beispielsweise unter einem notwendigen Winkel zum Werkstück positioniert ist, da ab einer gewissen Winkelabweichung, also wenn der Benutzer den Schweißbrenner beispielsweise verkantet, ein längerer Lichtbogen gezogen bzw. gebildet wird und somit ein bestimmter Schwellwert von Strom und Spannung überschritten und der Laserstrahl nicht gezündet, bzw. während des Schweißprozesses deaktiviert wird. Somit ist wiederum in einfacher Art und Weise die Sicherheit der Laser-Hybrid-Einheit gewährleistet.

Vorteilhafterweise wird die Lasereinheit mit einer zeitlichen Verzögerung nach dem Zünden des Lichtbogens, insbesondere nach Erreichen eines definierten Lichtbogenzustandes, zugeschalten. Dadurch wird in einfacher Art und Weise die Sicherheit erhöht, da ohne gezündetem Lichtbogen der Laserstrahl nicht aktiviert werden kann. Somit ist beispielsweise bei einem Handschweißbrenner die Gefahr einer ungewollten Aktivierung des Laserstrahls ausgeschlossen und somit das Verletzungsrisiko durch unsachgemäßes Hantieren mit dem Handschweißbrenner wesentlich minimiert.

Als Parameter des Lichtbogens können der Lichtbogenstrom und bzw. oder die Lichtbogenspannung herangezogen werden und auf diese Weise der Lichtbogenzustand erfasst werden.

Von Vorteil ist weiters, wenn die Zeitverzögerung einstellbar ist. Die Zeitverzögerung kann beispielsweise 500 ms betragen. Somit kann der Laserstrahl auf unterschiedliche Prozesszustände, insbesondere auf unterschiedliche Lichtbogenzustände, eingestellt werden.

Vorteilhafterweise ist die Leistung des Laserstrahls in Abhängigkeit der Leistung des Lichtbogens einstellbar. Dadurch kann die Laserleistung optimal an die jeweiligen Bedingungen angepasst werden, beispielsweise an Material und Dicke der zu verschweißenden Werkstücke, und für optimale Schweißergebnisse ein minimaler Energieaufwand erzielt werden. Üblicherweise ist dabei anzustreben, dass die Laserleistung im Wesentlichen der Lichtbogenleistung entspricht. Für bestimmte Schweißprozesse kann es aber auch von Vorteil sein, beispielsweise einen tieferen Einbrand zu erreichen, weshalb eine höhere Laserleistung im Verhältnis zur Lichtbogenleistung angestrebt wird.

Es ist daher zur Durchführung verschiedenster Schweißprozesse von Vorteil, wenn das Verhältnis von Laserleistung zu Lichtbogenleistung einstellbar ist.

Da die Lichtbogenleistung von der Schweißspannung und dem Schweißstrom des Schweißbrenners zur Erzeugung des Lichtbogens abhängt, ist es von Vorteil, wenn die Laserleistung in Abhängigkeit der Schweißspannung und bzw. oder des Schweißstromes des Schweißbrenners zur Erzeugung des Lichtbogens einstellbar ist. Dabei kann ein Regelkreis gebildet werden, in dem die Schweißspannung und bzw. oder der Schweißstrom des Schweißbrenners ermittelt und zur Einstellung der Versorgungseinheit für die Lasereinheit rückgekoppelt wird.

Schließlich ist es von Vorteil, wenn der Brennpunkt des Laserstrahls in Abhängigkeit der Lichtbogenlänge automatisch verändert wird. Die Lichtbogenlänge kann beispielsweise über die Schweißspannung des Schweißbrenners zur Erzeugung des Lichtbogens ermittelt werden und danach automatisch die Einrichtung zur Veränderung des Brennpunkts des Laserstrahls entsprechend angesteuert werden, so dass der Brennpunkt des Laserstrahls immer im Schweißbereich liegt. Darüber hinaus ist eine Korrektur des Brennpunkts des Laserstrahls notwendig, da sich dieser mit der eingebrachten Laserleistung ändert.

Gelöst wird die erfindungsgemäße Aufgabe auch durch eine oben genannte Vorrichtung zum kombinierten Laser-Lichtbogenschweißen, wobei eine Einrichtung zur zeitlich verzögerten Zuschaltung des Laserstrahls nach der Zündung des Lichtbogens vorgesehen ist.

Somit kann durch die Steuereinrichtung der Lasereinheit, welche natürlich mit der zumindest einen Steuereinheit zum Steuern der Lasereinheit und des Schweißbrenners identisch sein kann, ein gezieltes Ein- und Aus-schalten des Laserstrahls in Abhängigkeit der Lichtbogenleistung vorgenommen werden. Die Steuerungseinrichtung kann somit auch wirkungsvoll verhindern, dass bei nicht gezündetem Lichtbogen der Laserstrahl eingeschaltet wird und eine Gefahr darstellt und darüber hinaus dadurch hohe Laserenergie verbraucht wird. Dabei ist die Einrichtung zur Steuerung der Lasereinheit mit einer Einrichtung zur Erfassung der Schweißspannung und bzw. oder des Schweißstromes des Schweißbrenners verbunden. Damit kann ein Regelkreis realisiert werden, welcher eine automatische Anpassung der Laserleistung an die jeweilige Lichtbogenleistung vornimmt. Erfindungsgemäß ist eine Einrichtung zur zeitlich verzögerten Zuschaltung des Lasers nach der Zündung des Lichtbogens vorgesehen. Zu diesem Zweck ist eine Einrichtung zur Erfassung der Zündung des Lichtbogens notwendig, welche beispielsweise durch eine Messeinheit zur Messung der Spannung und bzw. oder des Stromes des Schweißbrenners gebildet sein kann. Nach Ablauf der definierten Zeitverzögerung wird die Versorgungseinheit für die Lasereinheit aktiviert und somit der Laserstrahl eingeschaltet.

Zur Einstellung der Leistung des Lasers in Abhängigkeit der Leistung des Lichtbogens ist vorteilhafterweise ein Einstellorgan vorgesehen. Dabei kann als Einstellorgan ein Drehregler oder auch eine numerische Tastatur zur Eingabe eines bestimmten Wertes oder eines bestimmten Verhältnisses vorgesehen sein.

Zur Kontrolle der eingestellten Werte ist es von Vorteil, wenn eine Anzeige zur Darstellung der eingestellten Laserleistung, der Lichtbogenleistung oder dergl. vorgesehen ist.

Vorteilhafterweise ist eine Einrichtung zur Einstellung der Zeitverzögerung vorgesehen. Dabei kann diese Einstellungseinrichtung wiederum durch einen Drehschalter oder eine numerische Tastatur zur Eingabe bestimmter Werte für die Zeitverzögerung gebildet sein.

Die Einrichtung zur Steuerung der Lasereinheit und die Einrichtung zur Steuerung des Lichtbogens kann durch einen digitalen Signalprozessor gebildet sein. Ein derartiger Signalprozessor kann leicht programmiert und an die jeweiligen Anforderungen angepasst werden.

Gemäß einem weiteren Merkmal der Erfindung ist vorgesehen, dass die Lasereinheit eine Einrichtung zur Veränderung des Brennpunktes des Lasers aufweist, welche mit einer Einrichtung zur Erfassung der Schweißspannung des Schweißbrenners zur Erzeugung des Lichtbogens verbunden ist.

Weitere Vorteile der vorliegenden Erfindung werden anhand der beigefügten Zeichnungen, welche ein Ausführungsbeispiel der Erfindung zeigen, näher erläutert.

Darin zeigen:
Fig. 1 ein Blockschaltbild einer erfindungsgemäßen Vorrichtung zum kombinierten Laser-Lichtbogenschweißen;
Fig. 2 ein Schweißgerät mit der erfindungsgemäßen Vorrichtung zum kom-binierten Laser-Lichtbogenschweißen;
Fig. 3 ein Bedienpaneel des Schweißgerätes gemäß Fig. 2;
Fig. 4 Strom- und Spannungs-Zeitdiagramme eines kombinierten Laser-/Pulsschweißprozesses;
Fig. 5 Strom- und Spannungszeitdiagramme eines kombinierten Laser-/Kurzschluss-Schweißprozesses; und
Fig. 6 Strom- und Spannungs-Zeitdiagramme eines kominierten Laser-/Kalt-Metall-Transfer-Schweißprozesses.

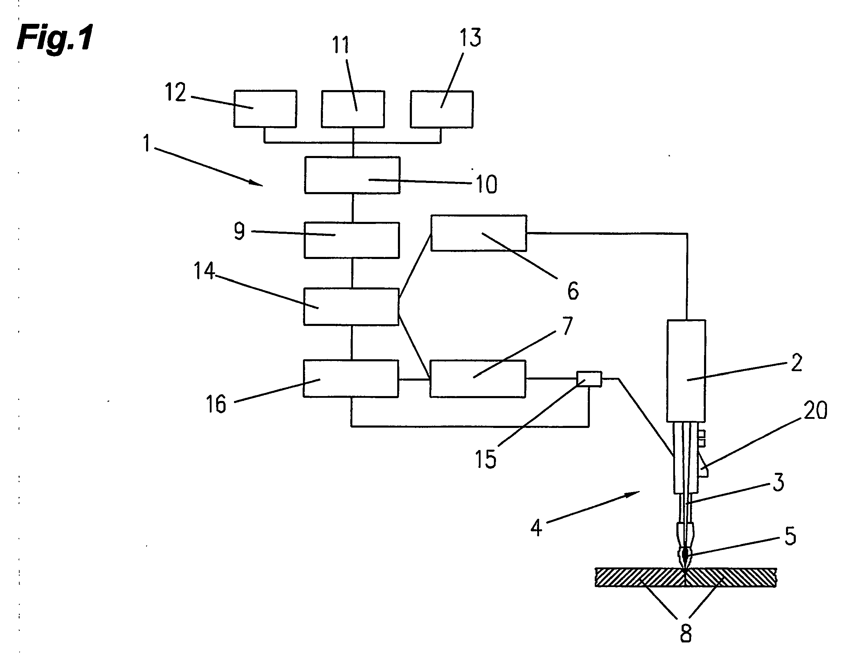

Fig. 1 zeigt eine Vorrichtung 1 zum kombinierten Laser-Lichtbogenschweißen, eine sog. Laser-Hybrid-Schweißanlage, mit einer Lasereinheit 2 zur Erzeugung eines Laserstrahls 3 in schematisch vereinfachter Darstellung. Weiters beinhaltet die Vorrichtung 1 einen Schweißbrenner 4 zur Erzeugung eines Lichtbogens 5, eine Versorgungseinheit 6 für die Lasereinheit 2 und eine Versorgungseinheit 7 für den Schweißbrenner 4, über welche die erforderliche Energie für beide Schweißprozesse eingestellt werden kann. Die Laser-Hybrid-Schweißanlage, also die Lasereinheit 2 und der Schweißbrenner 4, wird dabei auf die Verbindungsstelle zweier Werkstücke 8 gerichtet, wobei der Laserstrahl 3, dem Schweißbrenner 4 bevorzugt voreilend angeordnet ist, also der Laserstrahl 3 zuerst und in Schweißrichtung nachlaufend der Lichtbogen 5 auf die Verbindungsstelle der Werkstücke 8 gerichtet wird.

Beim Schweißbrenner 4 kann es sich um unterschiedliche Schweißbrenner 4 für verschiedene Schweißprozesse handeln, bevorzugt wird jedoch ein MIG/MAG-Schweißprozess ausgeführt. Zum Steuern der Lasereinheit 2 und des Schweißbrenners 4 ist eine Steuervorrichtung 9 vorgesehen, welche neben der Steuerung auch die Bedienung und Überwachung der Schweißvorrichtung 1 umfasst. Über eine Schnittstelle 10 können ein Bedienpaneel 11, eine Fernbedienung 12 und beispielsweise ein Drahtvorschub 13 mit der Schweißvorrichtung 1 verbunden werden. Erfindungsgemäß ist eine Einrichtung 14 zur Steuerung der Lasereinheit 2 in Abhängigkeit des Schweißbrenners 4 vorgesehen. Dabei wird die Steuereinrichtung 14, welche beispielsweise durch einen digitalen Signalprozessor gebildet sein kann, vorteilhafterweise direkt mit der Versorgungseinheit 6 für die Lasereinheit 2 und der Versorgungseinheit 7 für den Schweißbrenner 4 verbunden. Dadurch kann über die Steuereinrichtung 14 das Verhältnis der Leistung P_{Laser} des Laserstrahls 3 zur Leistung P_{Arc} des Lichtbogens 5 eingestellt werden. Somit kann je nach den erforderlichen Bedingungen mit dem Laserstrahl 3 beispielsweise ein tieferer Einbrand in die Verbindungsstelle der Werkstücke 8 erreicht werden. Dies verbessert die Schweißung des nachfolgenden Lichtbogen-Schweißprozesses wesentlich, da der nachfolgende Schweißprozess mit weniger Leistung tiefer in die Verbindungsstelle der Werkstücke 8 einwirken kann. Die Versorgungseinheiten 6 und 7 können dabei natürlich auch durch eine gemeinsame Einheit gebildet werden. Die von der Versorgungseinheit 6 in das Werkstück 8 eingebrachte Leistung P_{Laser} bzw. Energie des Laserstrahls 3 wird an die jeweilige Leistung P_{Arc} bzw. Energie der Versorgungseinheit 7 des Lichtbogens 5 angepasst und entsprechend gesteuert.

Die Einrichtung 14 zur Steuerung der Lasereinheit 2 ist mit einer Einrichtung 15 zur Erfassung der Schweißspannung U und bzw. oder des Schweißstromes I des Schweißbrenners 4 allenfalls über einen Analog/Digital-Wandler 16 verbunden, um einen Regelkreis zu bilden. Durch eine derartige Rückkopplung erfolgt eine automatische Anpassung der Laserleistung P_{Laser} des Laserstrahls 3 an die Lichtbogenleistung P_{Arc} des Lichtbogens 5.

Üblicherweise ist in der Lasereinheit 2 eine Einrichtung zur Veränderung des Brennpunktes des Laserstrahls 3 vorgesehen, welche mit der Einrichtung 15 zur Erfassung der Schweißspannung des Schweißbrenners 4 verbunden sein kann. Dabei kann die Verbindung, wie dargestellt, über die Einrichtung 14 zur Steuerung der Lasereinheit 2 hergestellt werden. Dadurch kann die Länge des Lichtbogens 5 über die Schweißspannung U ermittelt werden und danach der Brennpunkt des Lasers 3 an diese ermittelte Länge des Lichtbogens 5 angepasst werden. Somit kann durch optimale Einstellung des Laserbrennpunkts die eingebrachte Energie minimiert werden. Weiters kann in der Einrichtung 14 zur Steuerung der Lasereinheit 2 eine Einrichtung zur zeitlich verzögerten Zuschaltung des Lasers 3 nach der Zündung des Lichtbogens 5 vorgesehen sein. Diese Zeitverzögerung ist vorteilhafterweise über Einstellorgane, beispielsweise am Bedienpaneel 11 oder an der Steuerungseinrichtung 14 einstellbar.

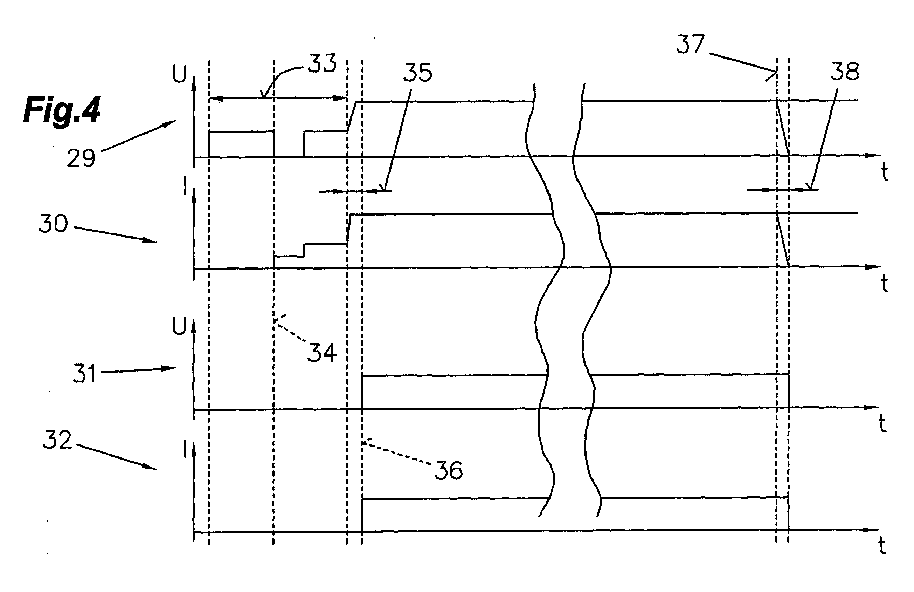

Die Parameter des Lichtbogens 5 zur Erfassung der Lichtbogenzustände werden von der Einrichtung 15 zur Erfassung der Schweißspannung U und bzw. oder des Schweißstromes I des Schweißbrenners 4 erfasst und an die Einrichtung 14 zur Steuerung der Lasereinheit 2 weitergegeben. Vorteilhafterweise werden während des Schweißprozesses Parameter des Lichtbogens 5, beispielsweise der Lichtbogenstrom I und bzw. oder die Lichtbogenspannung U, überwacht. Dadurch können definierte Abweichungen eines oder mehrerer Parameter des Lichtbogens 5 erkannt und die Lasereinheit 2 darauf entsprechend gesteuert werden. Beispielsweise kann auf diese Weise das Erlöschen des Lichtbogens 5 oder ein Kurzschluss des Lichtbogens 5 erkannt werden, worauf die Lasereinheit 2 deaktiviert wird und somit der Laserstrahl 3 erlischt. Bei Kurzschluss-behafteten Schweißprozessen findet jedoch bewusst oder willkürlich ein kurzzeitiger Kurzschluss des Lichtbogens 5 statt, der nicht zu einer automatischen Deaktivierung der Lasereinheit 2 führen soll. Zu diesem Zweck kann eine Zeitdauer 38 (s. Fig. 4-6) definiert werden, so dass beim Auftreten eines Kurzschlusses diese Zeitdauer 38 gestartet wird und die Lasereinheit 2 während des Kurzschlusses innerhalb dieser Zeitdauer 38 aktiviert bleibt und erst beim Überschreiten der Zeitdauer 38 und anliegendem Kurzschluss die Lasereinheit 2 deaktiviert wird. Dabei wird die Zeitdauer 38 größer ausgelegt als die übliche Dauer des Kurzschlusses beim Kurzschluss-behafteten Schweißprozess.

Wenn ein zu langer Lichtbogen 5 gezogen wird, steigen entweder der Schweißstrom I oder die Schweißspannung U des Lichtbogens 5 an. Dies kann aus unterschiedlichen Gründen erfolgen, beispielsweise durch zu weites Entfernen des Schweißbrenners 4 von den Werkstücken 8, oder aber auch durch Änderung des Winkels des Schweißbrenners 4 zu den Werkstücken 8. Bei definierter Abweichung eines definierten Parameters des Lichtbogens 5 wird dann die Lasereinheit 2 mittels der Steuereinrichtung 14 deaktiviert.

Somit ist sichergestellt, dass der Laserstrahl 3 kein Verletzungsrisiko darstellt. Wenn der Schweißbrenner 4 beispielsweise verkantet wird, also der Winkel des Schweißbrenners 4 zu den Werkstücken 8 verändert wird, könnte es passieren, dass der Laserstrahl 3 über die Werkstücke 8 hinaus brennt und somit umstehende Personen verletzen könnte oder aber auch an in der Nähe befindlichen Geräten einen Schaden verursachen könnte. Da bei Winkeländerung der Lichtbogen 5 länger wird und der Lichtbogen 5 seine Parameter ändert, kann über die Erfassung der Parameter des Lichtbogens 5 der Laserstrahl 3 automatisch deaktiviert werden. Der Laserstrahl 3 wird nach Abreißen des Lichtbogens 5 sofort abgeschaltet, wodurch nach Beendigung des Schweißverfahrens der Benutzer den Schweißbrenner 4 mit der Lasereinheit 2 weglegen kann, ohne dass der Benutzer den Laserstrahl 3 ungewollt aktivieren kann. Die Erfassungseinrichtung 15 kann auch mit einer Kurzschlusserkennung kombiniert sein, so dass der Laserstrahl 3 bei einem Kurzschluss des Lichtbogens 5, wie er bei einem Kurzschluss-Schweißprozess auftritt, nicht deaktiviert wird. Dadurch kann bei Kurzschluss-Schweißprozessen während des Kurzschlusses ein weiterer Einbrand in das Werkstück 8 durch den Laserstrahl 3 erfolgen.

Die Einrichtung 15 wird auch zur Erfassung der Zündung des Lichtbogens 5 eingesetzt, und der Laserstrahl 3 erst nach dem Zünden des Lichtbogens 5 eingeschaltet. Der Laserstrahl 3 wird nach einer vordefinierten Zeitverzögerung eingeschaltet, um eine unsachgemäße Handhabung des Schweißbrenners 4 mit der Lasereinheit 2 zu verhindern und somit eine größtmögliche Sicherheit zu gewährleisten. Dadurch wird in einfacher Art und Weise erreicht, dass der Laserstrahl 3 ohne gezündetem Lichtbogen 5 nicht aktiviert wird und somit das Verletzungs- bzw. Beschädigungsrisiko durch einen ungewollt aktivierten Laserstrahl 3 ausgeschlossen wird.

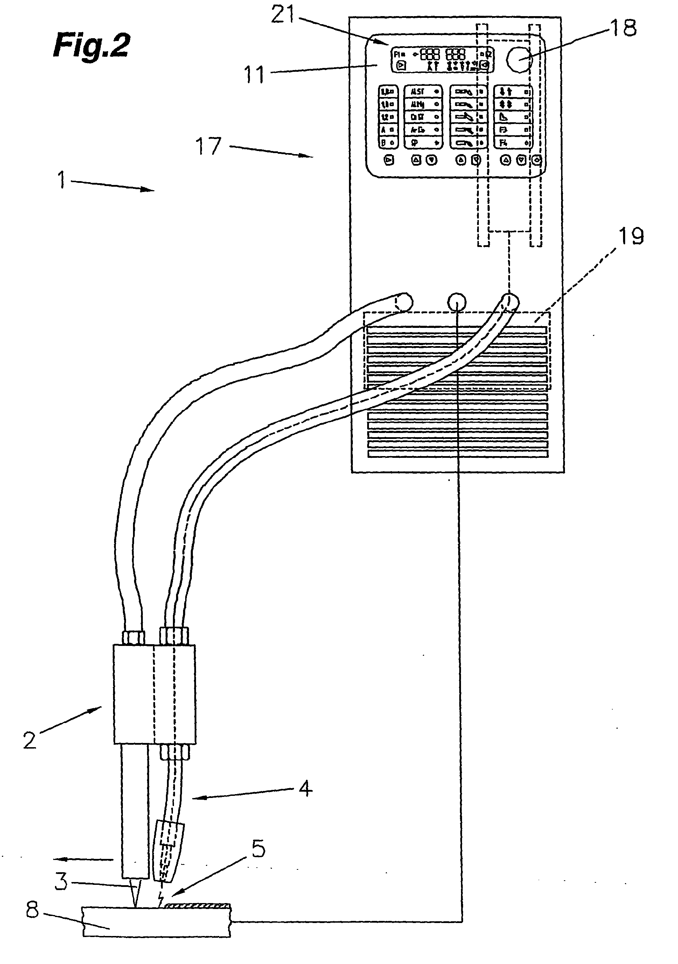

In Fig. 2 ist ein Schweißgerät 17 mit einem Bedienpaneel 11 schematisch dargestellt. Die Energie kann vom Benutzer mittels eines am Bedienpaneel 11 angeordneten Einstellorgans 18, insbesondere eines Drehreglers, geregelt werden. Das Einstellorgan 18 kann auch an einer Fernbedienung 12 angeordnet sein, welche in diesem Ausführungsbeispiel nicht dargestellt ist.

Im dargestellten Ausführungsbeispiel ist sowohl der Laserstrahl 3 als auch der Lichtbogen 5 von einer gemeinsamen im Schweißgerät 17 angeordneten Schweißstromquelle 19 versorgt. Es können natürlich auch für beide Einheiten jeweils eine oder auch mehrere Schweißstromquellen 19 im Schweißgerät 17 oder außerhalb des Schweißgerätes 17 angeordnet sein. Die Schweißstromquelle 19 liefert nach dem Einschalten des Schweißgerätes 17 bzw. nach dem Betätigen eines in Fig. 1 dargestellten Brennertasters 20 am Schweißbrenner 4 Energie für beide Schweißverfahren. Somit kann nunmehr beispielsweise der Lichtbogen 5 mit konstanter Energie versorgt werden, während die Leistung des Laserstrahls 3 je nach Erfordernis des Benutzers geregelt werden kann. Natürlich kann dabei auch der Laserstrahl 3 konstant mit Energie beaufschlagt werden und der Lichtbogen 5 an die Erfordernisse angepasst werden.

Dabei können auch die Laserleistung P_{Laser} des Laserstrahls 3 und die Lichtbogenleistung P_{Arc} des Lichtbogens 5 im Verhältnis zueinander vorzugsweise über ein einziges Einstellorgan 18 geregelt werden. Somit liefert die Schweißstromquelle 19 die benötigte Energie und mittels des einen Einstellorgans 18 kann die Leistung der beiden Schweißverfahren je nach Bedürfnis bzw. Beschaffenheit der Werkstücke 8 geregelt werden.

Dadurch kann für optimale Schweißergebnisse ein minimaler Energieaufwand erzielt werden. Üblicherweise ist dabei anzustreben, dass die Laserleistung P_{Laser} im Wesentlichen der Lichtbogenleistung P_{Arc} entspricht. Für bestimmte Schweißprozesse kann es aber auch von Vorteil sein, beispielsweise einen tieferen Einbrand in die Werkstücke 8 zu erreichen, weshalb eine höhere Laserleistung P_{Laser} im Verhältnis zur Lichtbogenleistung P_{Arc} angestrebt wird.

Wird beispielsweise die Laserleistung P_{Laser} gegenüber der Lichtbogenleistung P_{Arc} erhöht, kann beim Schweißprozess durch den Laserstrahl 3 ein tieferer Einbrand in die Werkstücke 8 erzielt werden. Der Lichtbogen 5 füllt aufgrund der gegenüber dem Laserstrahl 3 reduzierten Leistung nur noch den Spalt zwischen den Werkstücken 8. Ein großer Vorteil bei einer höheren Leistung P_{Laser} des Laserstrahls 3 besteht darin, dass die Schweißgeschwindigkeit ohne nennenswerten Qualitätsverlust wesentlich erhöht werden kann. Natürlich kann auch der Brennpunkt des Laserstrahls 3 so eingestellt werden, dass er beispielsweise in der Mitte der Dicke der Werkstücke 8 liegt. Dann kann anstelle der Leistungsänderung lediglich der Brennpunkt des Laserstrahls 3 geändert werden. Bei verringerter Leistung P_{Laser} des Laserstrahls 3 erfolgt ein geringerer Einbrand des Laserstrahls 3 in die Werkstücke 8, wodurch aufgrund des vorhandenen Schmelzbades eine bessere Spaltüberbrückbarkeit durch den Lichtbogen geschaffen und somit eine sichere, bessere und fehlerfreie bzw. nahezu fehlerfreie Schweißnaht erzeugt wird.

Es ist daher zur Durchführung verschiedenster Schweißprozesse von Vorteil, wenn das Verhältnis von Laserleistung P_{Laser} zur Lichtbogenleistung P_{Arc} einstellbar ist. Vorteilhaft ist dabei, dass durch die Einstellung des Verhältnisses der Laserleistung P_{Laser} zur Lichtbogenleistung P_{Arc} beispielsweise mittels nur eines einzigen Eistellorgans 18 eine einfach Bedienung erzielt wird, da der Benutzer lediglich durch eine einzige Verstellung eine entsprechende Leistungsänderung beider Energiequellen vornehmen kann.

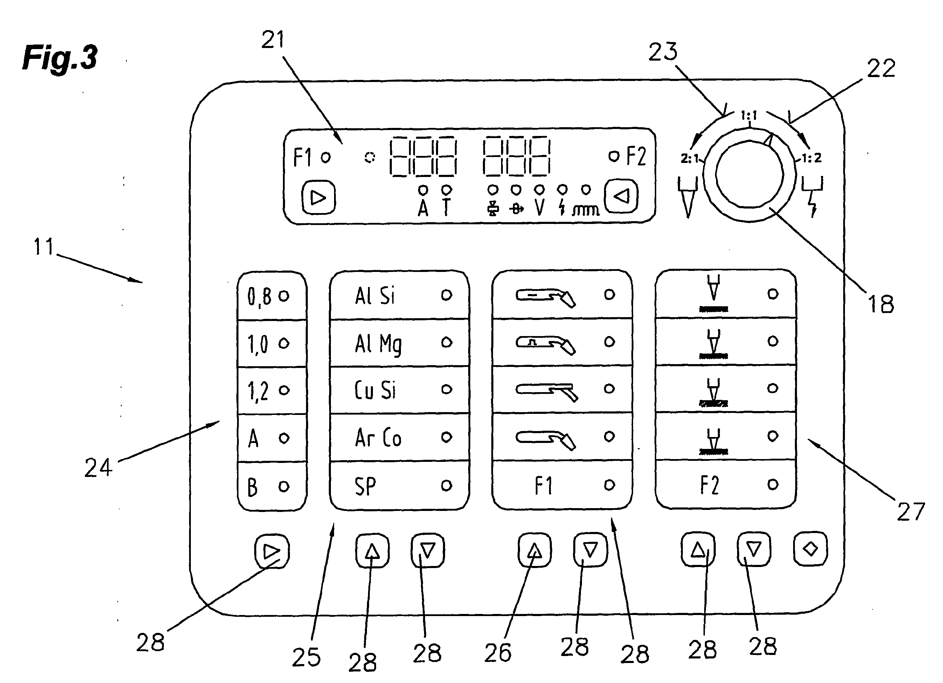

In Fig. 3 ist das Bedienpaneel 11 des Schweißgerätes gemäß Fig. 2 dargestellt. Das Bedienpaneel 11 und/oder die Fernbedienung 12 kann auch eine Anzeige 21 aufweisen, auf der die eingestellten Leistungswerte des Laserstrahls 3 und des Lichtbogens 5 dargestellt und vom Benutzer abgelesen werden können.

Über das Einstellorgan 18 kann das Verhältnis der Leistung des Laserstrahls 3 zum Lichtbogen 5 eingestellt werden. Somit kann beispielsweise die Laserleistung P_{Laser} im Verhältnis zur Lichtbogenleistung P_{Arc} reduziert werden (Pfeil 22), wodurch der Einbrand des Laserstrahls 3 an der Verbindungsstelle der Werkstücke 8 und somit die Aufschmelzung der Werkstücke 8 weniger tief erfolgt. Da die Leistung P_{Arc} des Lichtbogens 5 jedoch im Verhältnis zur Leistung P_{Laser} des Laserstrahls 3 entsprechend höher eingestellt ist, wird beispielsweise eine bessere Spaltüberbrückbarkeit erreicht. Genauso kann auch die Leistung P_{Laser} des Laserstrahls 3 entsprechend höher angelegt werden (Pfeil 23) als die Leistung P_{Arc} des Lichtbogens 5, wodurch ein wesentlich größerer Einbrand des Laserstrahls 3 erfolgt und der Lichtbogen 5, der dem Laserstrahl 3 nacheilt, mit weniger Leistung eine Schweißnaht über die Verbindungsstelle der Werkstücke 8 zieht. Ein großer Vorteil einer höheren Leistung P_{Laser} des Laserstrahls 3 besteht darin, dass dadurch die Schweißgeschwindigkeit ohne nennenswerten Qualitätsverlust wesentlich erhöht werden kann.

Am Bedienpaneel 11 können noch weitere Einstellmöglichkeiten für den Laserstrahl 3 und den Lichtbogen 5 vorgesehen sein. Beispielsweise kann der Durchmesser des Zusatzwerkstoffes des verwendeten nachgereihten Schweißprozesses durch Betätigen eines Tasters 28 in einfacher Art und Weise ausgewählt und auf einer Anzeige 24 dargestellt werden. Weiters kann das Material des verwendeten Zusatzwerkstoffes eingestellt und auf einer Anzeige 25 dargestellt werden, der nacheilende Schweißprozess eingestellt und auf einer Anzeige 26 zur Darstellung gebracht werden, sowie der Brennpunkt des Laserstrahls 3 eingestellt und auf einer Anzeige 27 dargestellt werden. Somit werden durch Betätigen der Taster 28 in einfacher Art und Weise die für den Laser-Hybrid-Schweißprozess gewünschten Werte festgelegt.

Somit kann vom Benutzer für die zu verschweißenden Werkstücke 8 das optimale Schweißverfahren, insbesondere der optimale Laser-Hybrid-Schweißprozess eingestellt werden. Um beispielsweise den Verzug der Werkstücke 8 zu regulieren, insbesondere zu minimieren, kann mit dem Laserschweißprozess ein Kalt-Metall-Transfer-Schweißprozess kombiniert werden. Selbstverständlich sind auch sämtliche anderen gängigen Schweißprozesse in Kombination mit dem Laserschweißprozess einstellbar.

In Fig. 4 ist nun ein Spannungszeitdiagramm 29 und ein Stromzeitdiagramm 30 eines MIG-Schweißprozesses und ein Spannungszeitdiagramm 31 und ein Stromzeitdiagramm 32 des Laserschweißprozesses dargestellt. Beispielsweise wird bei dem erfindungsgemäß zum Laserschweißprozess kombinierten Schweißverfahren zum Zünden des Lichtbogens 5 das so genannte "Lift-Arc-Prinzip" während der Zündphase 33 verwendet. Dabei wird ein Zusatzwerkstoff, insbesondere ein Schweißdraht, bis zur Berührung mit den Werkstücken 8 vorbewegt und anschließend die Schweißdrahtbewegung umgekehrt und der Schweißdraht auf einen vordefinierten Abstand vom Werkstück 8 zurückbefördert und die Schweißdrahtbewegung neuerlich umgekehrt. Durch das Beaufschlagen des Schweißdrahtes ab einem Zeitpunkt 34 des Kurzschlusses mit einem definierten Strom I, der so gewählt wird, dass ein An- bzw. Aufschmelzen des Schweißdrahtes verhindert wird, erfolgt bei der Rückwärtsbewegung und beim Abheben des Schweißdrahtes die Zündung des Lichtbogens 5. Nach dem Zünden des Lichtbogens 5, wird nach einer vordefinierten zeitlichen Verzögerung 35 der Laserstrahl 3 zu einem Zeitpunkt 36 aktiviert. Somit wird die Lasereinheit 2 mit einer Zeitverzögerung 35 nach dem Zünden des Lichtbogens 5 zugeschaltet. Dadurch wird einerseits die Sicherheit weiter erhöht, da ein Verletzungsrisiko durch einen zu früh aktivierten Laserstrahl 3 vermieden wird, und andererseits wird die notwendige Energieeinbringung für die Erzeugung des Laserstrahls 3 verringert. Darüber hinaus wird nur bei sicher gezündetem Lichtbogen 5 der Laserstrahl 3 zugeschaltet. Durch diese Maßnahme wird erreicht, dass erst nach Ablauf der definierten Zeitverzögerung 35 des Zündens des Lichtbogens 5 der Laserstrahl 3 eingeschaltet wird, so dass sicher gestellt ist, dass tatsächlich ein Schweißprozess gestartet wurde und somit der Laser-Hybrid-Schweißbrenner ordnungsgemäß angewendet wird.

Die Zeitverzögerung 35 ist vorteilhafterweise einstellbar und kann beispielsweise 500 ms betragen. Es werden auch die Parameter des Lichtbogens 5 ermittelt und an die Steuereinrichtung 14 weitergegeben und der Laserstrahl 3 entsprechend gesteuert. Somit kann der Laserstrahl 3 nur bei Erreichen eines definierten Zustandes des Lichtbogens 5 gezündet werden.

Bei Beendigung des Schweißprozesses entsprechend dem Zeitpunkt 37 erkennt die Erfassungseinrichtung 15 den fehlenden Strom I und bzw. oder die fehlende Spannung U des Lichtbogens 5. Dies wird der Einrichtung 14 weitergegeben, welche die Energieversorgung der Lasereinheit 2 stoppt. Somit ist eine automatische Abschaltung des Laserstrahls 3 gewährleistet, unabhängig davon, ob der Lichtbogen 5 gewollt beendigt wird oder ob der Benutzer den Schweißbrenner 4 mit der Lasereinheit 2 bei einer Handschweißung unabsichtlich soweit vom Werkstück 8 abhebt, so dass der Lichtbogen 5 abreißt. Dadurch wird die Sicherheit enorm erhöht, da der Laserstrahl 3 erst bei einem aufrechten Lichtbogen 5 aktiviert wird und außerdem bei einer unabsichtlichen oder auch absichtlichen Beendigung des Schweißprozesses nach einer einstellbaren Zeitdauer 38 wieder deaktiviert wird und dadurch keine unsachgemäße Handhabung des Schweißbrenners 4 mit der Lasereinheit 2 erfolgen kann.

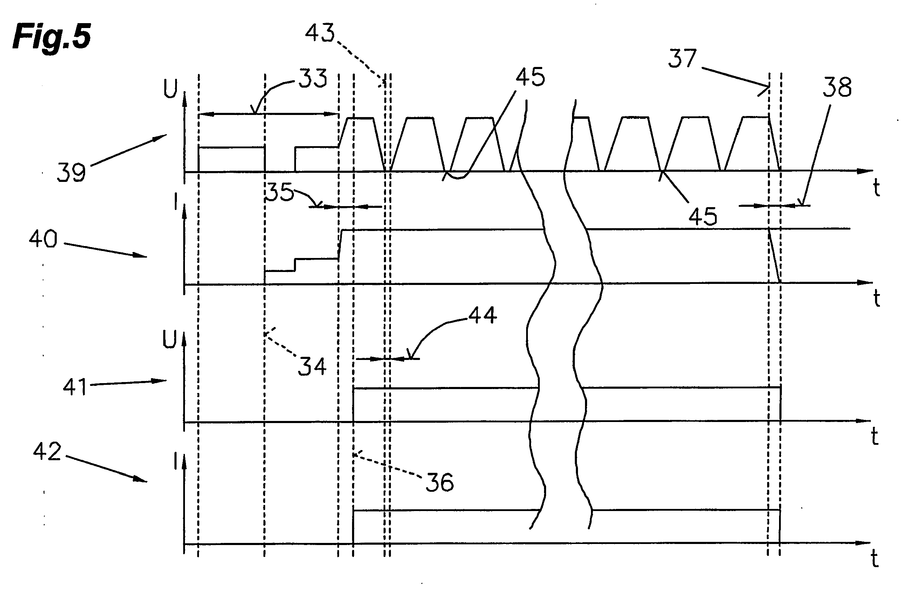

In Fig. 5 ist ein Spannungszeitdiagramm 39 und ein Stromzeitdiagramm 40 eines Puls-Schweißprozesses und ein Spannungszeitdiagramm 41 und ein Stromzeitdiagramm 42 des Lasers 3 dargestellt.

Nach der Zündphase 33, welche wiederum nach dem Lift-Arc-Prinzip erfolgt wird zum Zeitpunkt 36 nach einer Zeitdifferenz 35 ein Puls-Schweißprozess gestartet.

Beim Puls-Schweißprozess erfolgt nach der Zündphase 33 eine Bewegung des Schweißdrahtes in Richtung des Werkstückes 8 bis zum Kontakt mit dem Werkstück 8. Es wird zum Zeitpunkt 43 ein Kurzschluss gebildet, weshalb kein Lichtbogen 5 aufrecht ist. Die Dauer des Kurzschlusses bzw. die Zeitdauer 44, bis der Lichtbogen 5 wieder gezündet wird, ist bei diesem Verfahren jedoch sehr gering. Der Laserstrahl 3 bleibt durchgehend, also auch während des Kurzschlusses bzw. der Zeitdauer 44 beim Puls-Schweißverfahren aktiviert. Dies wird dadurch erreicht, dass eine Zeitdauer 38 vorgegeben wird, über die der Kurzschluss bestehen muss, bevor die Lasereinheit 2 deaktiviert wird. Nach Erkennen des Kurzschlusses zum Zeitpunkt 43, nachdem der Lichtbogen 5 erloschen ist und somit die Spannung U auf einen Nullwert 45 gesunken ist, wird die Lasereinheit 2 nur dann aktiviert, wenn die Spannung U über eine vorgegebene Zeitdauer 38 auf dem Nullwert 45 bleibt. Die Zeitdauer 38, bis der Laserstrahl 3 von der von der Einrichtung 15 angesteuerten Einrichtung 14 abgeschaltet wird, muss also beim Kurzschluss-Schweißverfahren höher ausgelegt werden, als die Zeitdauer 44 des Kurzschlusses, bis der Lichtbogen 5 wieder gezündet wird. Jedoch ist die Zeitdauer 38 bis zum Abschalten des Laserstrahls 3 so gewählt, dass möglichst wenig Zeit nach der tatsächlichen Beendigung des Schweißprozesses vergeht, so dass wiederum eine größtmögliche Sicherheit beim Einsatz des Schweißbrenners 4 mit der Lasereinheit 2 gewährleistet ist. Die Zeitdauer 38 kann dabei beispielsweise zwischen 0,5 und 2 Sekunden liegen. Dies hat besonders im Bereich der Handschweißung Vorteile, da der Benutzer bei unsachgemäßer Handhabung keine Verletzungen bzw. Verletzungen anderer Personen, oder Schäden an umliegenden Gegenständen durch den Laserstrahl 3 in Kauf nehmen muss.

Es ist auch möglich, dass die Einrichtung 15 bei Erkennen des Kurzschlusses kein Signal an die Einrichtung 14 weitergibt, wodurch der Laserstrahl 3 während der Zeitdauer 44 des Kurzschlusses nicht deaktiviert wird. Dadurch kann die Zeitdauer 38 bis zum Deaktivieren des Laserstrahls 3 nochmals verkürzt werden, wodurch eine noch höhere Sicherheit der erfindungsgemäßen Laser-Hybrid-Einheit resultiert.

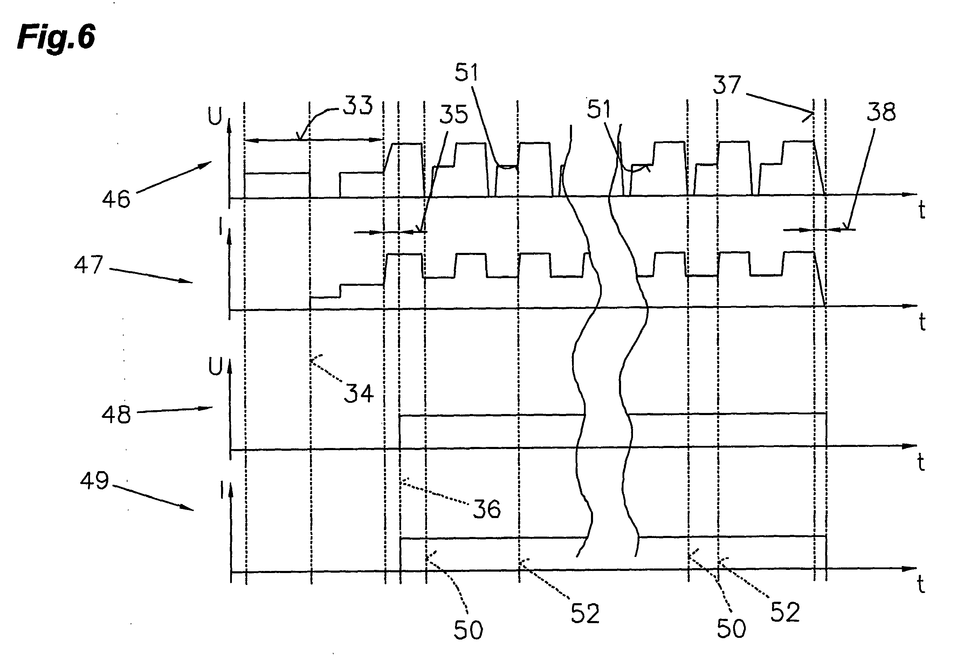

Fig. 6 zeigt nunmehr ein Spannungs-Zeitdiagramm 46 und ein Strom-Zeitdiagramm 47 eines Kalt-Metall-Transfer-Schweißprozesses und ein Spannungszeitdiagramm 48 und ein Stromzeitdiagramm 49 des Laserstrahls 3.

Der Kalt-Metall-Transfer-Schweißprozess wird dabei wiederum mittels der oben beschriebenen Lift-Arc-Zündung während der Zündphase 33 gestartet. Nach Zündung des Lichtbogens 5 wird nach einer Zeitverzögerung 35 der Laserstrahl 3 zum Zeitpunkt 36 aktiviert.

Während des Kalt-Metall-Transfer-Schweißprozesses wird der Zusatzwerkstoff, insbesondere der Schweißdraht, von einer Ausgangsposition in Richtung der Werkstücke 8 bewegt. Nachdem der Schweißdraht die Werkstücke 8 berührt und dadurch zum Zeitpunkt 50 ein Kurzschluss gebildet wird, erfolgt eine Umkehr der Drahtförderung und der Schweißdraht wird vorzugsweise wieder in die Ausgangsposition zurückbewegt. Um eine Tropfenbildung bzw. ein Anschmelzen des Schweißdrahtendes während des Kalt-Metall-Transfer-Schweißprozesses zu erreichen, wird während der Vorwärtsbewegung des Schweißdrahtes in Richtung der Werkstücke 8 der Schweißstrom I gegenüber einem Grundstrom 51 zum Zeitpunkt 52 erhöht. Aufgrund des Eintauchens des Schweißdrahtes in das Schmelzbad und der folgenden Rückwärtsbewegung des Schweißdrahtes wird der Tropfen bzw. das angeschmolzene Material vom Schweißdraht abgelöst (nicht dargestellt). Zur Unterstützung der Tropfenablöse kann auch eine impulsartige Erhöhung des Schweißstromes I durchgeführt werden.

Der Vorteil der Kombination des Laserschweißverfahrens mit dem Kalt-Metall-Transfer-Schweißprozess liegt darin, dass mit dem Kalt-Metall-Transfer-Schweißprozess wesentlich weniger Energie und Wärme in die Werkstücke 8 eingebracht wird. Dadurch wird beispielsweise der Verzug der Werkstücke 8 in vorteilhafter Weise minimiert, da der Kalt-Metall-Transfer-Schweißprozess ein so genannter kalter Schweißprozess ist.

## Patentansprüche

1. Verfahren zum kombinierten Laser-Lichtbogenschweißen mittels Handschweißbrenner (4), wobei eine Lasereinheit (2) zur Erzeugung eines Laserstrahls (3) und der Schweißbrenner (4) zur Erzeugung eines Lichtbogens (5) mit Energie versorgt und gesteuert werden, und die Lasereinheit (2) in Abhängigkeit des Schweißbrenners (4) gesteuert wird, wobei während des Schweißprozesses Parameter des Lichtbogens (5) überwacht werden, und die Lasereinheit (2) erst nach dem Zünden des Lichtbogens (5) zugeschaltet wird, **dadurch gekennzeichnet, dass** die Lasereinheit (2) mit einer zeitlichen Verzögerung (35) nach dem Zünden des Lichtbogens (5) zugeschaltet wird, wobei die Zündung **dadurch** erkannt wird, dass Parameter des Lichtbogens (5) definierte Werte erreichen, und dass bei definierter Abweichung eines Parameters des Lichtbogens (5) über eine vorgegebene Zeitdauer (38) die Lasereinheit (2) deaktiviert wird.

2. Verfahren nach Anspruch 1, **dadurch gekennzeichnet, dass** der Lichtbogenstrom (I) und bzw. oder die Lichtbogenspannung (U) überwacht werden.

3. Verfahren nach Anspruch 1 oder 2, **dadurch gekennzeichnet, dass** die Zeitverzögerung (35) einstellbar ist.

4. Verfahren nach einem der Ansprüche 1 bis 3, **dadurch gekennzeichnet, dass** die Leistung (P_{Laser}) des Laserstrahls (3) in Abhängigkeit der Leistung (P_{Arc}) des Lichtbogens (5) einstellbar ist.

5. Verfahren nach Anspruch 4, **dadurch gekennzeichnet, dass** die Laserleistung (P_{Laser}) im Verhältnis zur Lichtbogenleistung (P_{Arc}) einstellbar ist.

6. Verfahren nach Anspruch 4 oder 5, **dadurch gekennzeichnet, dass** die Laserleistung (P_{Laser}) in Abhängigkeit der Schweißspannung (U) und bzw. oder des Schweißstromes (I) des Schweißbrenners 4 zur Erzeugung des Lichtbogens 5 einstellbar ist.

7. Verfahren nach einem der Ansprüche 1 bis 6, **dadurch gekennzeichnet, dass** der Brennpunkt des Laserstrahls (3) in Abhängigkeit der Länge des Lichtbogens (5) automatisch verändert wird.

8. Vorrichtung zum kombinierten Laser-Lichtbogenschweißen, mit einer Lasereinheit (2) zur Erzeugung eines Laserstrahls (3), einem Handschweißbrenner (4) zur Erzeugung eines Lichtbogens (5), einer Versorgungseinheit (6) für die Lasereinheit (2) und einer Versorgungseinheit (7) für den Schweißbrenner (4), und zumindest einer Steuereinheit (9) zum Steuern der Lasereinheit (2) und des Schweißbrenners (4), wobei eine Einrichtung (14) zur Steuerung der Lasereinheit (2) in Abhängigkeit des Schweißbrenners (4) vorgesehen ist, welche mit einer Einrichtung (15) zur Erfassung der Schweißspannung (U) und bzw. oder des Schweißstromes (I) des Schweißbrenners (4) verbunden ist, **dadurch gekennzeichnet, dass** eine Einrichtung zur zeitlich verzögerten Zuschaltung des Laserstrahls (3) nach der Zündung des Lichtbogens (5) vorgesehen ist.

9. Vorrichtung nach Anspruch 8, **dadurch gekennzeichnet, dass** ein Einstellorgan (18) zur Einstellung der Leistung (P_{Laser}) des Laserstrahls (3) in Abhängigkeit der Leistung (P_{Arc}) des Lichtbogens (5) vorgesehen ist.

10. Vorrichtung nach Anspruch 8 oder 9, **dadurch gekennzeichnet, dass** zumindest eine Anzeige (21, 24, 25, 27, 28) zur Darstellung der eingestellten Laserleistung (P_{Laser}), der Lichtbogenleistung (P_{Arc}) oder dergl. vorgesehen ist.

11. Vorrichtung nach einem der Ansprüche 8 bis 10, **dadurch gekennzeichnet, dass** eine Einrichtung zur Einstellung der Zeitverzögerung (35) vorgesehen ist.

12. Vorrichtung nach einem der Ansprüche 8 bis 11, **dadurch gekennzeichnet, dass** die Einrichtung (14) zur Steuerung der Lasereinheit (2) und die Einrichtung (14) zur Steuerung des Lichtbogens (5) durch einen digitalen Signalprozessor gebildet ist.

13. Vorrichtung nach einem der Ansprüche 8 bis 12, **dadurch gekennzeichnet, dass** die Lasereinheit (2) eine Einrichtung zur Veränderung des Brennpunktes des Laserstrahls (3) aufweist, welche mit einer Einrichtung (15) zur Erfassung der Schweißspannung (U) und bzw. oder des Schweißstromes (I) des Schweißbrenners (4) zur Erzeugung des Lichtbogens (5) verbunden ist.

## Claims

1. A method for combined laser-arc welding for a hand-held welding torch (4), wherein a laser unit (2) for producing a laser beam (3) and the welding torch (4) for producing an electric arc (5) are supplied with energy and controlled, and the laser unit (2) is controlled as a function of the welding torch (4), wherein the parameters of the electric arc (5) are monitored during the welding process, and the laser unit (2) is only activated after the ignition of the electric arc (5), **characterized in that** the laser unit (2) is activated with a time delay (35) after the ignition of the electric arc (5), said ignition being recognized **in that** parameters of the electric arc (5) have attained defined values, and that the laser unit (2) is deactivated at a defined deviation of the parameters of the electric arc (5) over a predetermined period of time (38).

2. A method according to claim 1, **characterized in that** the arc current (I) and/or the arc voltage (U) are monitored.

3. A method according to claim 1 or 2, **characterized in that** the time delay (35) is adjustable.

4. A method according to any one of claims 1 to 3, **characterized in that** the power (Pₗₐₛₑᵣ) of the laser beam (3) is adjustable as a function of the power (P_{arc}) of the electric arc (5).

5. A method according to claim 4, **characterized in that** the laser power (Pₗₐₛₑᵣ) is adjustable in proportion to the power of the electric arc (P_{arc}).

6. A method according to claim 4 or 5, **characterized in that** the laser power (Pₗₐₛₑᵣ) is adjustable as a function of the welding voltage (U) and/or the welding current (I) of the welding torch (4) for producing the electric arc (5).

7. A method according to any one of claims 1 to 6, **characterized in that** the focus of the laser beam (3) is automatically changed as a function of the length of the electric arc (5).

8. A device for combined laser-arc welding, including a laser unit (2) for producing a laser beam (3), a hand-held welding torch (4) for producing an electric arc (5), a supply unit (6) for the laser unit (2) and a supply unit (7) for the welding torch (4), and at least one control unit (9) for controlling the laser unit (2) and the welding torch (4), wherein a device (14) for controlling the laser unit (2) as a function of the welding torch (4) is provided, which is connected with a device (15) for detecting the welding voltage (U) and/or the welding current (I) of the welding torch (4), **characterized in that** a device for the temporally delayed activation of the laser beam (3) after the ignition of the electric arc (5) is provided.

9. A device according to claim 8, **characterized in that** an adjustment member (18) is provided for the adjustment of the power (Pₗₐₛₑᵣ) of the laser beam (3) as a function of the power (P_{arc}) of the electric arc (5).

10. A device according to claim 8 or 9, **characterized in that** at least one display (21, 24, 25, 27, 28) is provided for indicating the adjusted laser power (Pₗₐₛₑᵣ), arc power (P_{arc}) or the like.

11. A device according to any one of claims 8 to 10, **characterized in that** a device for adjusting the time delay (35) is provided.

12. A device according to any one of claims 8 to 11, **characterized in that** the device (14) for controlling the laser unit (2) and the device (14) for controlling the electric arc (5) are comprised of a digital signal processor.

13. A device according to any one of claims 8 to 12, **characterized in that** the laser unit (2) comprises a device for changing the focus of the laser beam (3), which is connected with a device (15) for detecting the welding voltage (U) and/or the welding current (I) of the welding torch (4) for producing the electric arc (5).

## Revendications

1. Procédé de soudage combiné au laser et à l'arc au moyen d'un chalumeau manuel (4), dans lequel une unité laser (2) est alimentée en énergie et commandée pour produire un rayon laser (3) et le chalumeau à souder (4) est alimenté en énergie et commandé pour produire un arc électrique (5), et l'unité laser (2) est commandée en fonction du chalumeau à souder (4), dans lequel pendant le processus de soudage des paramètres de l'arc électrique (5) sont surveillés, et l'unité laser (2) est activée seulement après allumage de l'arc électrique (5), **caractérisé en ce que** l'unité laser (2) est activée avec une temporisation (35) après allumage de l'arc électrique (5), l'allumage étant reconnu **en ce que** des paramètres de l'arc électrique (5) atteignent des valeurs définies, et **en ce qu'**en cas d'écart défini d'un paramètre de l'arc électrique (5), l'unité laser (2) est désactivée pendant une durée prédéfinie (38).

2. Procédé selon la revendication 1, **caractérisé en ce que** le courant d'arc électrique (I) et/ou la tension d'arc électrique (U) sont surveillés.

3. Procédé selon la revendication 1 ou 2, **caractérisé en ce que** la temporisation (35) est réglable.

4. Procédé selon l'une quelconque des revendications 1 à 3, **caractérisé en ce que** la puissance (P_{Laser}) du rayon laser (3) est réglable en fonction de la puissance (P_{Arc}) de l'arc électrique (5).

5. Procédé selon la revendication 4, **caractérisé en ce que** la puissance laser (P_{Laser}) est réglable par rapport à la puissance d'arc électrique (P_{Arc}).

6. Procédé selon la revendication 4 ou 5, **caractérisé en ce que** la puissance laser (P_{Laser}) est réglable en fonction de la tension de soudage (U) et/ou du courant de soudage (I) du chalumeau à souder (4) pour produire l'arc électrique (5).

7. Procédé selon l'une quelconque des revendications 1 à 6, **caractérisé en ce que** le foyer du rayon laser (3) est modifié automatiquement en fonction de la longueur de l'arc électrique (5).

8. Dispositif de soudage combiné au laser et à l'arc avec une unité laser (2) pour produire un rayon laser (3), un chalumeau à souder manuel (4) pour produire un arc électrique (5), une unité d'alimentation (6) pour l'unité laser (2) et une unité d'alimentation (7) pour le chalumeau à souder (4), et au moins une unité de commande (9) pour commander l'unité laser (2) et le chalumeau à souder (4), un dispositif (14) pour la commande de l'unité laser (2) en fonction du chalumeau à souder (4) étant prévu, lequel est relié à un dispositif (15) pour détecter la tension de soudage (U) et/ou le courant de soudage (I) du chalumeau à souder (4), **caractérisé en ce qu'**il est prévu un dispositif pour l'activation temporisée du rayon laser (3) après allumage de l'arc électrique (5).

9. Dispositif selon la revendication 8, **caractérisé en ce qu'**il est prévu un organe de réglage (18) pour régler la puissance (P_{Laser}) du rayon laser (3) en fonction de la puissance (P_{Arc}) de l'arc électrique (5).

10. Dispositif selon la revendication 8 ou 9, **caractérisé en ce qu'**il est prévu au moins un affichage (21, 24, 25, 27, 28) pour représenter la puissance laser (P_{Laser}), la puissance d'arc électrique (P_{Arc}) réglée ou similaire.

11. Dispositif selon l'une quelconque des revendications 8 à 10, **caractérisé en ce qu'**il est prévu un dispositif pour régler la temporisation (35).

12. Dispositif selon l'une quelconque des revendications 8 à 11, **caractérisé en ce que** le dispositif (14) pour la commande de l'unité laser (2) et le dispositif (14) pour la commande de l'arc électrique (5) sont formés par un processeur numérique de signaux.

13. Dispositif selon l'une quelconque des revendications 8 à 12, **caractérisé en ce que** l'unité laser (2) comporte un dispositif pour faire varier le foyer du rayon laser (3), lequel est relié à un dispositif (15) pour détecter la tension de soudage (U) et/ou le courant de soudage (I) du chalumeau à souder (4), afin de produire l'arc électrique (5).
